# EUROPEAN PATENT SPECIFICATION

(11) **EP 2 965 862 B1**
(45) Date of publication and mention of the grant of the patent: **12.06.2019**
(21) Application number: 14760475.5
(22) Date of filing: 04.03.2014
(51) Int. Cl.: B23Q 11/08, B23Q 1/70, B23Q 1/62

(54) **MACHINE TOOL**
MASCHINENWERKZEUG
MACHINE-OUTIL

(30) Priority: 04.03.2013 KR 20130022978
(43) Date of publication of application: 13.01.2016
(73) Proprietor: Doosan Machine Tools Co., Ltd., Chang-won-si, Gyeongsangnam-do 51537 (KR)
(72) Inventor: SEO, Sang Il, Gimhae-si Gyeongsangnam-do 621-831 (KR)
(74) Representative: Isarpatent
(86) International application number: PCT/KR2014/001750
(87) International publication number: WO 2014/137125

(56) References cited:
- EP-A1- 1 213 092
- WO-A1-02/45904
- DE-A1-102011 052 406
- KR-A- 20030 069 650
- KR-A- 20100 102 198
- KR-B1- 101 180 566
- US-A1- 2003 143 048
- US-A1- 2005 031 425

## Description

### [Technical Field]

The present disclosure relates to a machine tool, and more particularly, to a machine tool which is provided with a covering device applicable to a machine tool in which an ATC and a spindle head are integrally provided. Document US2003/0143048A1, which forms the basis for the preamble of claim 1, discloses a machine tool comprising a covering device for protecting the machine bed from chips and coolant.

### [Background Art]

A machine tool is a machine used to process metallic or nonmetallic materials (hereinafter, referred to as a base material) to have a shape and a dimension using appropriate tools through various types of cutting or non-cutting operations, or used to more precisely process the base material.

The machine tool includes a table for fixing and moving the base material, and a tool post for processing the base material.

Recently, a multitasking machine, which is a single machine tool capable of performing various types of machining operations, is used. In general, the multitasking machine is provided with an automatic tool changer (ATC) capable of changing a plurality of tools mounted on a tool magazine in order to perform various types of machining operations.

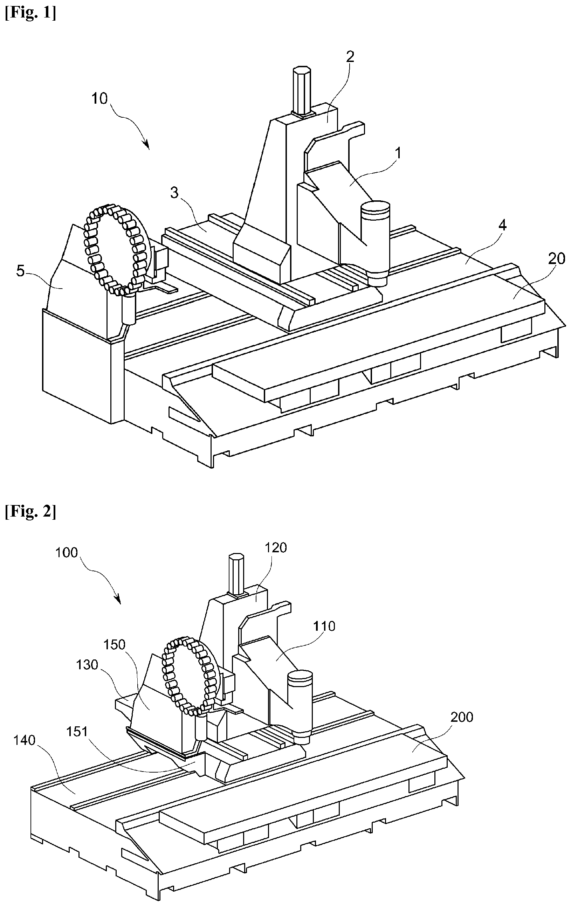

FIG. 1 is a perspective view of a machine tool provided with an ATC 5 in the related art.

Referring to FIG. 1, the machine tool in the related art includes a tool post 10 including a spindle head 1, a column 2, a saddle 3, a feed unit 4, and the ATC 5, and a table 20 on which a base material is mounted.

In this case, a processing region is defined at a front side in the machine tool where the spindle head 1 and the table 20 are positioned, and a non-processing region is defined at a rear side in the machine tool where the column 2, the saddle 3, the ATC 5, and the feed unit 4 are positioned.

A tool for processing the base material is mounted on the spindle head 1, and the tool processes the base material by receiving rotational force from the spindle head 1.

The spindle head 1 is mounted at a front side of the column 2, and the column 2 moves the spindle head 1 upward and downward.

The column 2 is mounted at an upper side of the saddle 3, and the saddle 3 moves the column 2 forward and rearward. That is, as the saddle 3 moves forward and rearward, the column 2 and the spindle head 1 are also moved forward and rearward.

The saddle 3 is mounted at an upper side of the feed unit 4, and the feed unit 4 moves the saddle 3 left and right. That is, the left and right movement of the feed unit 4 moves the saddle 3, the column 2, and the spindle head 1 left and right.

The table 20 is provided at an upper side of the feed unit 4, and a base material, which will be processed by the spindle head 1, is mounted on the table 20.

That is, the position of the spindle head 1 may be changed in all directions by the movements of the column 2, the saddle 3, and the feed unit 4, and it is possible to process the base material mounted on the table 20 in all directions.

Meanwhile, in the machine tool in the related art, a plurality of tools is mounted on a tool magazine, and then the ATC 5, which is capable of changing the tools to be mounted on the spindle head 1, is fixed to one end of the feed unit 4.

In this structure, that is, in a case in which the ATC 5 is fixed to one end of the feed unit 4, the spindle head 1 needs to move to the ATC 5 when the tools are changed. There is a problem in that a transfer axis of the machine tool of the related art cannot be extended even though the transfer axis needs to be extended, because it takes an excessive amount of time to change the tools.

In addition, in the related art, a separate cover is installed on the ATC 5 to prevent chips or a coolant from entering the ATC 5 during a process of processing a workpiece, and protects the ATC 5. A cover of the ATC 5 makes the structure of the ATC 5 itself complicated, and only prevents foreign substances from entering the ATC 5, and as a result, there is a problem in that it is somewhat difficult to prevent foreign substances from entering other components, that is, components in the non-processing region.
Patent Document: DE 10 2011 052406 A1

### [Disclosure]

### [Technical Problem]

The present disclosure has been made in an effort to solve the above problems, and an object of the present disclosure is to provide a machine tool capable of reducing tool changing time even though a transfer axis of a feed unit is extended.

Another object of the present disclosure is to provide a machine tool that prevents foreign substances from entering a non-processing region while processing.

### [Technical Solution]

To achieve the above objects, the present disclosure provides a machine tool according to claim 1 of the present application.

### [Effects]

The present disclosure has an effect in that the tool changing time is reduced compared to the related art even though a transfer axis is extended, and consequently, processing time is reduced, and productivity is improved.

In addition, the present disclosure has an effect in that foreign substances are basically prevented from entering the non-processing region, thereby improving durability of the machine tool.

### [Description of Drawings]

FIG. 1 is a perspective view of a machine tool provided with an ATC in the related art.
FIG. 2 is a perspective view of a machine tool according to an exemplary embodiment of the present disclosure in which an ATC is provided on a saddle.
FIG. 3 is a perspective view of the machine tool provided with a covering device according to the exemplary embodiment of the present disclosure.
FIG. 4 is a front perspective view of the covering device according to the exemplary embodiment of the present disclosure.
FIG. 5 is a partial perspective view illustrating a portion of a transfer frame when viewed from a rear side of the covering device according to the exemplary embodiment of the present disclosure.
FIG. 6 is a view illustrating a state in which the machine tool according to the exemplary embodiment of the present disclosure is used.

### [Description of Main Reference Numerals of Drawings]

- 100:: Tool post
- 110:: Spindle head
- 120:: Column
- 130:: Saddle
- 140:: Feed unit
- 150:: ATC
- 200:: Table
- 300:: Covering device
- 310:: Main frame
- 320:: Transfer frame
- 330:: Opening and closing frame
- 340:: Curtain portion
- 350:: Cylinder
- 360:: Guide

Hereinafter, an exemplary embodiment of the present disclosure will be described in detail with reference to the accompanying drawings.

Unless particularly defined otherwise, all terms used herein have the same meanings as general meanings of terms which are understood by those skilled in the art, and if a term used herein conflicts with a general meaning of the term, the meaning of the term defined herein will supersede the general meaning.

However, the disclosure to be described below is only to explain the exemplary embodiment of the present disclosure but not limit the scope of the present disclosure, and like reference numerals indicate like elements throughout the specification.

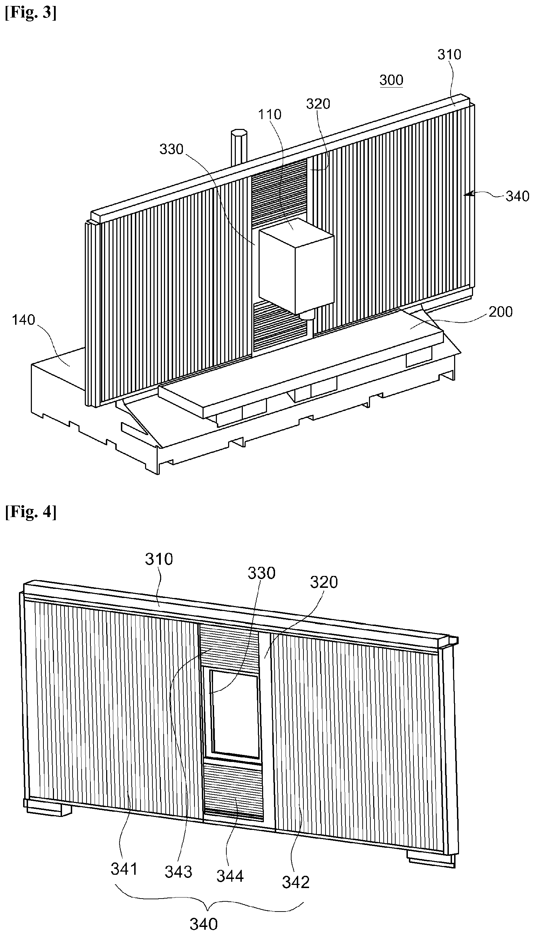

FIG. 2 is a perspective view of a machine tool according to an exemplary embodiment of the present disclosure in which an ATC 150 is provided on a saddle 130, and FIG. 3 is a perspective view of the machine tool provided with a covering device 300 according to the exemplary embodiment of the present disclosure.

Referring to FIGS. 2 and 3, the machine tool according to the exemplary embodiment of the present disclosure includes a tool post 100 including a spindle head 110, a column 120, the saddle 130, a feed unit 140, and the ATC 150, a table 200 on which a base material is mounted, and the covering device 300.

In the drawings, a processing region is defined at a front side in the machine tool where the spindle head 110 and the table 200 are positioned, and a non-processing region is defined at a rear side in the machine tool where the column 120, the saddle 130, the ATC 150, and the feed unit 140 are positioned.

A tool for processing the base material is mounted on the spindle head 110, and the tool processes the base material mounted on the table 200 by receiving rotational force from the spindle head 110.

The spindle head 110 is mounted at a front side of the column 120, and the column 120 moves the spindle head 110 upward and downward.

The column 120 is mounted at an upper side of the saddle 130, and the saddle 130 moves the column 120 forward and rearward. That is, as the saddle 130 moves forward and rearward, the column 120 and the spindle head 110 are also moved forward and rearward.

The saddle 130 is mounted at an upper side of the feed unit 140, and the feed unit 140 moves the saddle 130 left and right. That is, the left and right movement of the feed unit 140 moves the saddle 130, the column 120, and the spindle head 110 left and right.

The table 200 is provided at an upper side of the feed unit 140, and a base material, which will be processed by the spindle head 110, is mounted on the table 200.

That is, the position of the spindle head 110 may be changed in all directions by the movements of the column 120, the saddle 130, and the feed unit 140, and it is possible to process the base material mounted on the table 200 in all directions.

In addition, an automatic tool changer (ATC) 150, which changes the tools to be mounted on the spindle head 110, is provided at one side of the saddle 130 in order to reduce the time required to change the tools. Specifically, the ATC 150 is a device capable of changing tools to be clamped to the spindle head 110 after a plurality of tools is mounted in a tool magazine, and the saddle 130 may be provided with a bracket 151 for mounting the ATC 150.

The ATC 150 is provided on the saddle 130 as described above, in other words, the ATC 150 is provided to be adjacent to the spindle head 110, and as a result, with the ATC 150 that is moved together with the spindle head 110 when the spindle head 110 is moved, the present disclosure may consequently improve productivity by reducing the tool changing time.

Meanwhile, in a case in which the ATC 150 is provided to be adjacent to the spindle head 110, the ATC 150 becomes more likely to be exposed to foreign substances, such as chips produced when the base material is processed, in comparison with the case, like the related art, in which the ATC is provided at one end of a transfer axis.

Therefore, the present disclosure includes a covering device 300 which shields the non-processing region including the column 120, the saddle 130, and the feed unit 140 from the processing region in a state in which the processing region including the spindle head 110 and the table 200 is exposed.

The covering device 300 includes an main frame 310, a transfer frame 320, an opening and closing frame 330, and a curtain portion 340.

The main frame 310 is a large rectangular frame fixedly provided to divide a region into the processing region and the non-processing region, a lower end of the main frame 310 may be mounted on the feed unit 140 at a rear side of the table 200, and an upper end of the main frame 310 may be mounted on a housing (not illustrated) of the machine tool. In addition, both surfaces of the main frame 310 may be fixed to an inner wall of the housing of the machine tool.

The transfer frame 320 is mounted at upper and lower sides of the fixed main frame 310 so as to be movable left and right. Here, force to move the transfer frame 320 left and right is provided by the movement of the spindle head 110. That is, when the spindle head 110 is moved left and right by the movement of the feed unit 140, the transfer frame 320 is also moved.

Meanwhile, because a method of mounting the transfer frame 320 on the main frame 310 so that the transfer frame 320 may be moved left and right is apparent to those skilled in the art, a detailed description thereof will be omitted.

Reference is made to the following drawings to describe the opening and closing frame 330.

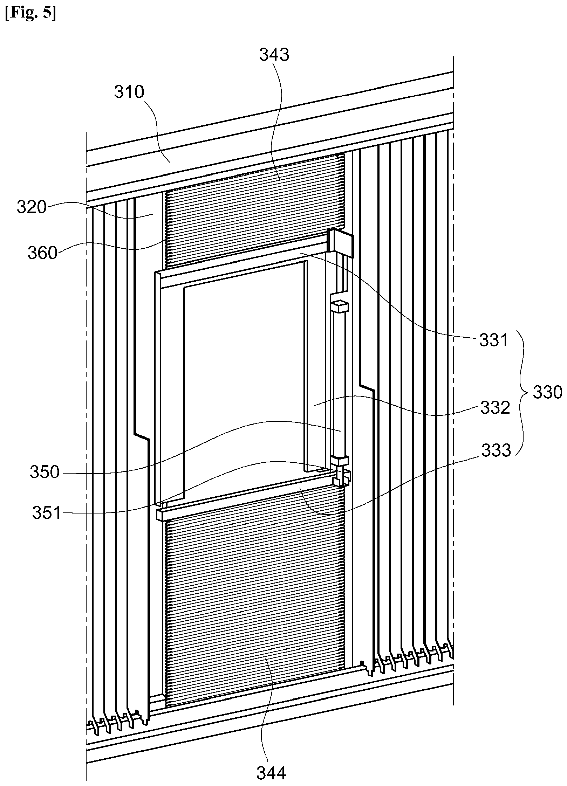

FIG. 4 is a front perspective view of the covering device 300 according to the exemplary embodiment of the present disclosure, and FIG. 5 is a partial perspective view illustrating a portion of the transfer frame 320 when viewed from a rear side of the covering device 300 according to the exemplary embodiment of the present disclosure.

Referring to FIGS. 4 and 5, the opening and closing frame 330 is mounted on the transfer frame 320 and moved upward and downward, and the spindle head 110 is exposed through the opening and closing frame 330. Here, force to move the opening and closing frame 330 upward and downward is provided by the movement of the spindle head 110. That is, when the spindle head 110 is moved upward and downward by the movement of the column 120, the opening and closing frame 330 is also moved.

Specifically, the opening and closing frame 330 includes a pair of lateral frames 332 which is mounted on both surfaces of the transfer frame 320 and moved upward and downward, an upper frame 331 which is provided at upper ends of the pair of lateral frames 332, and a lower frame 333 which is separated from lower ends of the pair of lateral frames 332 when the spindle head 110 is moved forward and rearward.

The reason why the lower frame 333 is separated from the pair of lateral frames 332 will be described below. When the tool of the spindle head 110 needs to be changed, the spindle head 110 is moved rearward to change the tool selected from the plurality of tools provided on the ATC 150, and in this case, if the lower frame 333 is not separated from the pair of lateral frames 332, the spindle head 110 is caught by the lower frame 333 and cannot be moved rearward.

The lower frame 333 may be separated by using a cylinder 350. Specifically, the opening and closing frame 330 may further include the cylinder 350 which is provided on any one of the pair of lateral frames 332 and has a cylinder rod 351 that has a free end mounted on the lower frame 333, tightly attaches the lower frame 333 to the pair of lateral frames 332, and separates the lower frame 333 from the pair of lateral frames 332.

In addition, an initial position of the opening and closing frame 330 may be fixed by a guide 360. Specifically, the opening and closing frame 330 may further include the guide 360 formed in the form of a spring having one end and the other end that are connected to upper ends of the upper frame 331 and the transfer frame 320, respectively. The guide 360 is provided to set the initial position of the opening and closing frame 330, and may provide restoring force to the opening and closing frame 330 when the spindle head 110 is moved downward and then upward.

The covering device 300, which includes the aforementioned frames, includes curtain portions 340 that are provided in the main frame 310, the transfer frame 320, and the opening and closing frame 330.

Specifically, the curtain portion 340 includes a first cover 341 which is mounted on one lateral surface of the main frame 310 and one lateral surface of the transfer frame 320, a second cover 342 which is mounted on the other lateral surface of the main frame 310 and the other lateral surface of the transfer frame 320, a third cover 343 which is mounted on an upper surface of the transfer frame 320 and an upper surface of the opening and closing frame 330, and a fourth cover 344 which is mounted on a lower surface of the transfer frame 320 and a lower surface of the opening and closing frame 330, thereby shielding the processing region and the non-processing region to prevent foreign substances from entering the non-processing region.

The respective covers 341, 342, 343, and 344 may have a shape having a plurality of pleats like pleats of a skirt to fluidly move the frames.

An operation of the machine tool provided with the covering device 300 according to the exemplary embodiment of the present disclosure will be described below.

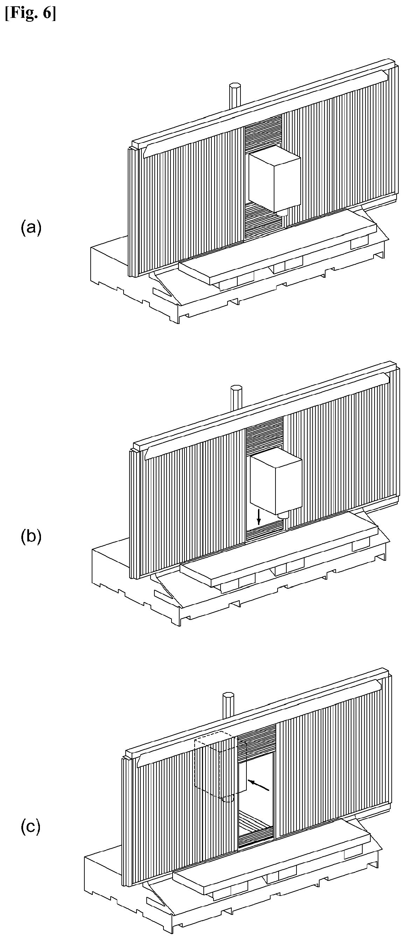

FIG. 6 is a view illustrating a state in which the machine tool according to the exemplary embodiment of the present disclosure is used.

Referring to FIG. 6, in a state illustrated in FIG. 6A, the processing region and the non-processing region are shielded, and the remaining components, except for the spindle head 110 and the table 200, are shielded by the covering device 300. In this state, it is possible to process the base material mounted on the table 200 by using the tool clamped at a free end of the spindle head 110. In this state, there is an advantage in that foreign substances, such as chips produced when the base material is processed, cannot enter the non-processing region.

Thereafter, the lower frame 333 of the opening and closing frame 330 needs to be opened at a lower end in order to change the tool clamped to the spindle head 110, like a state illustrated in FIG. 6B. This state may be implemented by the cylinder 350 provided on any one of the lateral frames 332 as already described above.

Thereafter, when the lower frame 333 of the opening and closing frame 330 is opened, the spindle head 110 is moved rearward by the saddle 130 like a state illustrated in FIG. 6C, and the tool is changed by the ATC 150 provided at one side of the saddle 130. That is, in the machine tool according to the exemplary embodiment of the present disclosure, it is not necessary to move the spindle head up to one end of the feed unit 140 to change the tool, thereby allowing the tool to be changed out quickly.

As the foregoing, it can be understood by those skilled in the art that the present disclosure may be variously changed and modified within the scope defined by the appended claims.

## Claims

1. A machine tool comprising:
a spindle head (110) for attaching a tool for processing a base material;
a column (120) configured to move the spindle head (110) upward and downward by being mounted the spindle head (110) at a front side;
a saddle (130) configured to move the column (120) forward and rearward by being mounted the column (120) at an upper side;
a feed unit (140) configured to move the saddle (130) left and right by being mounted the saddle (130) at an upper side;
a table (200) provided at one side of the feed unit (140) and on which the base material to be processed by the spindle head (110) is mounted; and
a covering device (300) configured to shield a non-processing region including the column (120), the saddle (130), and the feed unit (140) from a processing region including the spindle head (110) and the table (200),
wherein the covering device (300) includes:
a rectangular main frame (310);
a transfer frame (320) which is mounted on upper and lower sides of the main frame (310) and configured to be moved left and right;
an opening and closing frame (330) which is mounted on the transfer frame (320) and configured to be moved upward and downward and through which the spindle head (110) is exposed; and
a curtain portion (340) installed at the main frame (310), the transfer frame (320), the opening and closing frame (330),
**characterised in that**: the opening and closing frame (330) includes:
a pair of lateral frames (332) mounted on both surfaces of the transfer frame (320) and configured to be moved upward and downward;
an upper frame (331) which is provided at upper ends of the pair of lateral frames (332);
a cylinder (350) which is provided on any one of the pair of lateral frames (332); and
a lower frame (333) configured to be separated from lower ends of the pair of lateral frames (332) by the cylinder (350) when the spindle head (110) is moved from the processing region to the non-processing region or from the non-processing region to the processing region.

2. The machine tool of claim 1, wherein the curtain portion (340) include:
a first cover (341) mounted on one lateral surface of the main frame (310) and one lateral surface of the transfer frame (320);
a second cover (342) mounted on the other lateral surface of the main frame (310) and the other lateral surface of the transfer frame (320);
a third cover (343) mounted on an upper surface of the transfer frame (320) and an upper surface of the opening and closing frame (330); and
a fourth cover (344) mounted on a lower surface of the transfer frame (320) and a lower surface of the opening and closing frame (330).

3. The machine tool of claim 1, wherein the cylinder (350) has a cylinder (350) rod that has a free end mounted on the lower frame (333) and is configured to tightly attach the lower frame (333) to the pair of lateral frames (332) and separate the lower frame (333) from the pair of lateral frames (332).

4. The machine tool of any one of claims 1 and 3, further comprising: an automatic tool changer mounted on the saddle (130) and configured to change the tool to be mounted on the spindle head (110).

## Patentansprüche

1. Werkzeugmaschine, die Folgendes umfasst:
einen Spindelkopf (110) zum Befestigen eines Werkzeugs zum Bearbeiten eines Grundmaterials;
eine Säule (120), dazu ausgelegt, den Spindelkopf (110) nach oben und nach unten zu bewegen, indem der Spindelkopf (110) an einer Vorderseite montiert ist;
einen Sattel (130), dazu ausgelegt, die Säule (120) nach vorn und nach hinten zu bewegen, indem die Säule (120) an einer Oberseite montiert ist;
eine Zufuhreinheit (140), dazu ausgelegt, den Sattel (130) nach links und nach rechts zu bewegen, indem der Sattel (130) an einer Oberseite montiert ist;
einen Tisch (200), der an einer Seite der Zufuhreinheit (140) bereitgestellt ist und auf dem das durch den Spindelkopf (110) zu verarbeitende Grundmaterial montiert ist; und
eine Abdeckvorrichtung (300), dazu ausgelegt, einen Nicht-Verarbeitungsbereich, umfassend die Säule (120),
den Sattel (130) und die Zufuhreinheit (140), vor einem Verarbeitungsbereich, umfassend den Spindelkopf (110) und den Tisch (200), abzuschirmen,
wobei die Abdeckvorrichtung (300) Folgendes umfasst:
einen rechteckigen Hauptrahmen (310);
einen Übertragungsrahmen (320), der an oberen und unteren Seiten des Hauptrahmens (310) montiert ist und dazu ausgelegt ist, nach links und nach rechts bewegt zu werden;
einen Öffnungs- und Schließrahmen (330), der an dem Übertragungsrahmen (320) montiert ist und dazu ausgelegt ist, nach oben und nach unten bewegt zu werden, und durch den der Spindelkopf (110) freigelegt wird; und
einen Vorhangteil (340), der am Hauptrahmen (310), am Übertragungsrahmen (320), am Öffnungs- und Schließrahmen (330) installiert ist;
**dadurch gekennzeichnet, dass** der Öffnungs- und Schließrahmen (330) Folgendes umfasst:
ein Paar lateraler Rahmen (332), montiert an beiden Oberflächen des Übertragungsrahmens (320) und dazu ausgelegt, nach oben und nach unten bewegt zu werden;
einen oberen Rahmen (331), der an oberen Enden des Paares lateraler Rahmen (332) bereitgestellt ist;
einen Zylinder (350), der an einem beliebigen aus dem Paar lateraler Rahmen (332) bereitgestellt ist; und
einen unteren Rahmen (333), dazu ausgelegt, durch den Zylinder (350) von unteren Enden des Paares lateraler Rahmen (332) getrennt zu werden, wenn der Spindelkopf (110) aus dem Verarbeitungsbereich in den Nicht-Verarbeitungsbereich oder aus dem Nicht-Verarbeitungsbereich in den Verarbeitungsbereich bewegt wird.

2. Werkzeugmaschine nach Anspruch 1, wobei der Vorhangteil (340) Folgendes umfasst:
eine erste Abdeckung (341), montiert an einer lateralen Oberfläche des Hauptrahmens (310) und einer lateralen Oberfläche des Übertragungsrahmens (320);
eine zweite Abdeckung (342), montiert an der anderen lateralen Oberfläche des Hauptrahmens (310) und der anderen lateralen Oberfläche des Übertragungsrahmens (320);
eine dritte Abdeckung (343), montiert an einer oberen Oberfläche des Übertragungsrahmens (320) und einer oberen Oberfläche des Öffnungs- und Schließrahmens (330); und
eine vierte Abdeckung (344), montiert an einer unteren Oberfläche des Übertragungsrahmens (320) und einer unteren Oberfläche des Öffnungs- und Schließrahmens (330) .

3. Werkzeugmaschine nach Anspruch 1, wobei der Zylinder (350) eine Zylinder (350) stange aufweist, die ein freies Ende hat, das an dem unteren Rahmen (333) montiert ist und dazu ausgelegt ist, den unteren Rahmen (333) fest an dem Paar lateraler Rahmen (332) zu befestigen und den unteren Rahmen (333) von dem Paar lateraler Rahmen (332) zu trennen.

4. Werkzeugmaschine nach einem der Ansprüche 1 und 3, die ferner Folgendes umfasst: einen automatischen Werkzeugwechsler, montiert an dem Sattel (130) und dazu ausgelegt, das an dem Spindelkopf (110) zu montierende Werkzeug zu wechseln.

## Revendications

1. Machine-outil, comprenant:
une tête de broche (110) pour attacher un outil pour traiter un matériau de base;
une colonne (120) configurée de manière à déplacer la tête de broche (110) vers le haut et vers le bas en étant montée sur la tête de broche (110) à un côté avant;
une selle (130) configurée de manière à déplacer la colonne (120) vers l'avant et vers l'arrière en étant montée sur la colonne (120) à un côté supérieur;
une unité d'alimentation (140) configurée de manière à déplacer la selle (130) vers la gauche et vers la droite en étant montée sur la selle (130) à un côté supérieur;
une table (200) prévue d'un premier côté de l'unité d'alimentation (140) et sur laquelle le matériau de base à traiter par la tête de broche (110) est monté; et
un dispositif de recouvrement (300) configuré de manière à protéger une région de non traitement comprenant la colonne (120), la selle (130) et l'unité d'alimentation (140) d'une région de traitement comprenant la tête de broche (110) et la table (200),
dans laquelle le dispositif de recouvrement (300) comprend:
un cadre principal rectangulaire (310);
un cadre de transfert (320) qui est monté sur des côtés supérieur et inférieur du cadre principal (310) et qui est configuré de manière à être déplacé vers la gauche et vers la droite;
un cadre d'ouverture et de fermeture (330) qui est monté sur le cadre de transfert (320) et qui est configuré de manière à être déplacé vers le haut et vers le bas et à travers lequel la tête de broche (110) est exposée; et
une partie de rideau (340) qui est installée au niveau du cadre principal (310), du cadre de transfert (320) et du cadre d'ouverture et de fermeture (330),
**caractérisée en ce que** le cadre d'ouverture et de fermeture (330) comprend:
une paire de cadres latéraux (332) montés sur les deux surfaces du cadre de transfert (320) et configurés de manière à être déplacés vers le haut et vers le bas;
un cadre supérieur (331) qui est prévu au niveau des extrémités supérieures de la paire de cadres latéraux (332);
un cylindre (350) qui est prévu sur l'un quelconque de la paire de cadres latéraux (332); et
un cadre inférieur (333) configuré de manière à être séparé des extrémités inférieures de la paire de cadres latéraux (332) par le cylindre (350) lorsque la tête de broche (110) est déplacée de la région de traitement dans la région de non traitement ou de la région de non traitement dans la région de traitement.

2. Machine-outil selon la revendication 2, dans laquelle la partie de rideau (340) comprend:
un premier recouvrement (341) qui est monté sur une première surface latérale du cadre principal (310) et sur une première surface latérale du cadre de transfert (320);
un deuxième recouvrement qui est monté sur l'autre surface latérale du cadre principal (310) et sur l'autre surface latérale du cadre de transfert (320);
un troisième recouvrement qui est monté sur une surface supérieure du cadre de transfert (320) et sur une surface supérieure du cadre d'ouverture et de fermeture (330); et
un quatrième recouvrement qui est monté sur une surface inférieure du cadre de transfert (320) et sur une surface inférieure du cadre d'ouverture et de fermeture (330).

3. Machine-outil selon la revendication 1, dans laquelle le cylindre (350) comprend une tige de cylindre (350) qui présente une extrémité libre montée sur le cadre inférieur (333) et qui est configurée de manière à attacher étroitement le cadre inférieur (333) à la paire de cadres latéraux (332) et à séparer le cadre inférieur (333) de la paire de cadres latéraux (332).

4. Machine-outil selon l'une quelconque des revendications 1 à 3, comprenant en outre un changeur d'outil automatique qui est monté sur la selle (130) et qui est configuré de manière à changer l'outil à monter sur la tête de broche (110).
